# EUROPEAN PATENT SPECIFICATION

(11) **EP 2 908 498 B1**
(45) Date of publication and mention of the grant of the patent: **26.07.2017**
(21) Application number: 13854976.1
(22) Date of filing: 14.08.2013
(51) Int. Cl.: H04W 4/00, G06F 9/445, G06F 11/36

(54) **INTEGRATED APPLICATION GENERATING SYSTEM AND METHOD FOR INTERNET OF THINGS TERMINAL**
INTEGRIERTES ANWENDUNGSGENERIERUNGSSYSTEM UND VERFAHREN FÜR INTERNET-DER-DINGE-ENDGERÄT
SYSTÈME ET PROCÉDÉ DE GÉNÉRATION D'APPLICATION INTÉGRÉE POUR UN TERMINAL DE L'INTERNET DES OBJETS

(30) Priority: 14.11.2012 CN 201210456746
(43) Date of publication of application: 19.08.2015
(73) Proprietor: ZTE Corporation, Shenzhen, Guangdong 518057 (CN)
(72) Inventor: WAN, Bangrui, Shenzhen Guangdong 518057 (CN); ZUO, Yangmei, Shenzhen Guangdong 518057 (CN); YU, Hongyu, Shenzhen Guangdong 518057 (CN)
(74) Representative: Awapatent AB
(86) International application number: PCT/CN2013/081430
(87) International publication number: WO 2014/075471

(56) References cited:
- EP-A1- 2 437 524
- CN-A- 101 872 448
- CN-A- 102 271 156
- CN-A- 102 497 677
- US-A1- 2012 131 561
- US-B1- 6 266 709

## Description

### Technical Field

The present invention relates to the Internet of Things technology field, and in particular, to an integrated generation system and method for an Internet of Things terminal application.

### Background of the Related Art

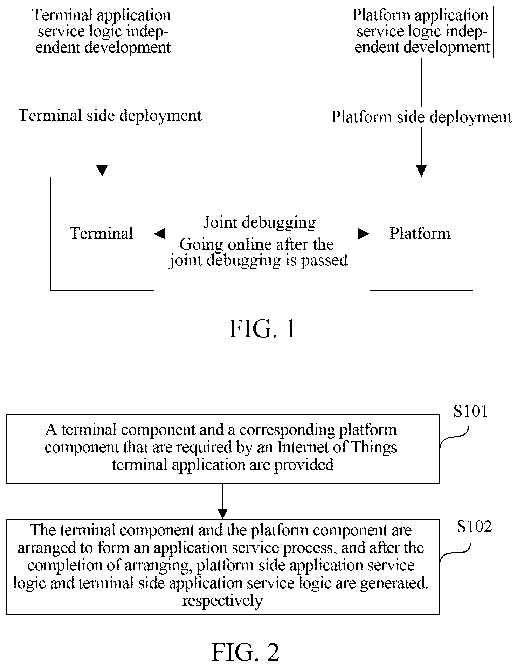

With the development of science and technology, the Internet of Things technology has become mature gradually, and all kinds of Internet of Things applications have come forth and are involved in all aspects of people's life, and all these bring enormous business opportunities to the relevant manufacturers in the Internet of Things field. The Internet of Things refers to the interconnected network which obtains the information of the physical world by deploying various terminal devices with certain perception, calculation, execution and communication capacities, and realizes the transmission, coordination and processing of the information via the network, thus realizing information exchange between people and things or between things and things in the wide area. The Internet of Things involves an Internet of Things platform, an Internet of Things terminal, Internet of Things applications and other intermediate networks, wherein the Internet of Things platform provides various functional interfaces for different Internet of Things applications. Generally, an Internet of Things application includes two parts of logic: platform side application service logic and terminal side application service logic. FIG. 1 is development modes of these two parts of application service logic in the related art, wherein the two are independently developed, tested and deployed, and roughly the following steps are included.

In step 1, the terminal side application service logic of the Internet of things is developed and tested alone.

In step 2, the platform side application service logic of the Internet of things is developed and tested alone.

In step 3, the two parts of application service logic are deployed to the platform and the terminal, respectively, to perform butt joint debugging of the platform side application service logic and the terminal side application service logic.

If the butt joint is unsuccessful, steps 1-3 are required to be executed repeatedly until the butt joint is successful, to form a whole Internet of things application system.

In an actual Internet of things application, its platform side application service logic and terminal side application service logic are relevant, and have close previous and next process relationship; however, the two are separated in the current practical Internet of things application, resulting in a large number of butt joint debugging work required to be performed on the platform side and terminal side before the Internet of Things application goes online formally; especially, if the platform side application service logic and the terminal side application service logic are developed by different manufacturers respectively, then the debugging process will be repeated for many times and the debugging time is often multiplied.

US2012/0131561 A1 provides model-based programming, configuring, and integrating networked embedded devices with other applications. Particular embodiments include an architecture having an application model layer that integrates the networked embedded devices with business application systems, by allowing the devices to be expressed as part of a business application concept. In certain embodiments, an intermediate device programming layer provides a network-centric programming abstraction, relieving the programmer of the details of low-level, node-centric programming. Finally, a self-optimizing run-time system layer adapts to the specific conditions in the deployed network embedded devices, by optimizing e.g. communication patterns and resource consumption based upon input from the higher layer(s). Embodiments may facilitate integration of networked embedded devices with the back ends of business applications, and may provide a unified extensible programming framework simplifying development of applications for network embedded devices.

EP EP2437524 provides an M2M (Machine to Machine) service platform and a working method thereof. The above M2M service platform comprises: a service procedure editing module, a service management module, and a service executing module, wherein the service procedure editing module is configured to combine function units, edit a service logic and generate a service; the service management module is configured to load and manage the service and inform the service executing module; and the service executing module is configured to receive a notification from the service management module, parse a script of the service logic, and perform a corresponding action according to the parsed result.

US6266709 B1 provides an object-oriented system, method and article of manufacture for a client-server failure reporting process. An interprise computing manager in which an application is composed of a client (front end) program which communicates utilizing a network with a server (back end) program. The client and server programs are loosely coupled and exchange information using the network. The client program is composed of a User Interface (UI) and an object-oriented framework (Presentation Engine (PE) framework). The UI exchanges data messages with the framework. The framework is designed to handle two types of messages: (1) from the UI, and (2) from the server (back end) program via the network. The framework includes a component, the mediator which manages messages coming into and going out of the framework. The system includes software for a client computer, a server computer and a network for connecting the client computer to the server computer which utilize an execution framework code segment configured to couple the server computer and the client computer via the network, by a plurality of client computer code segments resident on the server, each for transmission over the network to a client computer to initiate coupling; and a plurality of server computer code segments resident on the server which execute on the server in response to initiation of coupling via the network with a particular client utilizing the transmitted client computer code segment for communicating via a particular communication protocol. A runtime error and execution data logger is coupled to the runtime error and execution data logger and to the server back end computer code segment. A runtime error and execution data logger is coupled with an execution data reporting service and to the server back end computer code segment for tracking errors.

### Summary of the Invention

In order to solve the problem that the platform application service logic of the Internet of Things and the terminal application service logic of the Internet of Things are separated in the related art, the embodiments of the present invention provide an integrated generation system and method for Internet of Things platform and Internet of Things terminal.

The features of the method and system according to the present invention are defined in the independent claims, and the preferable features according to the present invention are defined in the dependent claims.

The embodiments of the present invention provide an integrated generation method for an Internet of Things terminal application, comprising:
providing a terminal component and a platform component that are required by the Internet of Things terminal application; and
arranging the terminal component and the platform component to form an application service process, and after completing the arrangement, generating a platform side application service logic and a terminal side application service logic.

Alternatively, said arrangement is performed in an arrangement area, and an arranged object comprises the following elements: a node, the terminal component, the platform component, a trigger service formed by encapsulating the terminal component and a trigger service formed by encapsulating the platform component.

Alternatively, the step of generating a terminal side application service logic and a platform side application service logic comprises:
generating the terminal side application service logic and the platform side application service logic according to analysis and judgment of an element type.

Alternatively, the method further comprises:
after generating the terminal side application service logic and the platform side application service logic, establishing a communication channel between the terminal side application service logic and the platform side application service logic, to simulate and debug the terminal side application service logic and the platform side application service logic.

Alternatively, the step of simulating and debugging the terminal side application service logic and the platform side application service logic comprises:
simulating a running condition of the terminal side application service logic and a running condition of the platform side application service logic through the communication channel; and
adjusting the terminal side application service logic and the platform side application service logic according to the running condition.

Alternatively, the method further comprises:
before simulating the running condition of the terminal side application service logic and the running condition of the platform side application service logic, judging the type of a current element, and using the terminal side application service logic to simulate when the current element is of a terminal type; using the platform side application service logic to simulate when the current element is of a platform type; and judging according to the type of a previous element of a process connecting line when the current element is of a common type.

Alternatively, the method further comprises:
after completing said simulating and debugging, releasing the terminal side application service logic and the platform side application service logic;
wherein, the step of releasing the terminal side application service logic and the platform side application service logic comprises:
   directly deploying the platform side application service logic into a platform execution system and deploying the terminal side application service logic into a terminal execution system, or, first processing the platform side application service logic and the terminal side application service logic to generate a platform side service logic application package and a terminal side service logic application package, and then deploying the platform side service logic application package into the platform execution system and deploying the terminal side service logic application package into the terminal execution system.

The embodiments of the present invention further provide an integrated generation system for an Internet of Things terminal application, comprising:
a component module, configured to: provide a terminal component and a platform component that are required by the Internet of Things terminal application; and
an arrangement module, configured to: arrange the terminal component and the platform component to form an application service process, and after completing the arrangement, generate a terminal side application service logic and a platform side application service logic.

Alternatively, the arrangement module provides an arrangement area, said arrangement is performed in the arrangement area, and an arranged object comprises the following elements: a node, the terminal component, the platform component, a trigger service formed by encapsulating the terminal component and a trigger service formed by encapsulating the platform component.

Alternatively, the arrangement module is configured to generate a terminal side application service logic and a platform side application service logic by means of:
generating the terminal side application service logic and the platform side application service logic according to analysis and judgment of an element type.

Alternatively, the system further comprises:
a debugging module, configured to: establish an information channel between the terminal side application service logic and the platform side application service logic, to simulate and debug the terminal side application service logic and the platform side application service logic.

Alternatively, the debugging module is configured to simulate and debug the terminal side application service logic and the platform side application service logic by means of:
simulating a running condition of the terminal side application service logic and a running condition of the platform side application service logic through a communication channel; and adjusting the terminal side application service logic and the platform side application service logic according to the running condition.

Alternatively, the debugging module is further configured to: before simulating the running condition of the terminal side application service logic and the running condition of the platform side application service logic, judge the type of a current element, and use the terminal side application service logic to simulate when the current element is of a terminal type; use the platform side application service logic to simulate when the current element is of a platform type; and judge according to the type of a previous element of a process connecting line when the current element is of a common type.

Alternatively, the system further comprises:
a releasing module, configured to: after completing the simulating and debugging by the debugging module, release the terminal side application service logic and the platform side application service logic;
wherein, the releasing module is configured to release the terminal side application service logic and the platform side application service logic by means of:
   directly deploying the terminal side application service logic into a terminal execution system and deploying the platform side application service logic into a platform execution system, or, first processing the terminal side application service logic and the platform side application service logic to generate a terminal side service logic application package and a platform side service logic application package, and then deploying the terminal side service logic application package into the terminal execution system and deploying the platform side service logic application package into the platform execution system.

The embodiments of the present invention further provide an Internet of Things terminal execution system, comprising:
a terminal component module, configured to: load a component required by a terminal side application service logic, and execute and maintain the component;
a terminal analysis and execution module, configured to: analyze and trigger the terminal side application service logic, to execute the terminal side application service logic; and
a terminal communication module, configured to: communicate with a platform corresponding to the present terminal execution system, and send a result of the present terminal execution system executing the terminal side application service logic to the platform.

Alternatively, the terminal analysis and execution module is configured to trigger the terminal side application service logic by means of:
triggering the terminal side application service logic by a starting node, a message command from the platform, or a terminal gathering data.

Alternatively, the system further comprises:
a terminal monitoring module, configured to: monitor an execution result of the terminal execution system executing the terminal side application service logic, and display the execution result when required.

The embodiments of the present invention further provide an Internet of Things platform execution system, comprising:
a platform component module, configured to: load a component required by a platform side application service logic, and execute and maintain the component;
a platform analysis and execution module, configured to: analyze and trigger the platform side application service logic; and
a platform communication module, configured to: perform communication between a terminal and a platform, and receive a result of the terminal executing the terminal side application service logic.

Alternatively, the platform analysis and execution module is configured to trigger the platform side application service logic by means of:
triggering the platform side application service logic through a starting node or a message command from the terminal.

Alternatively, the system further comprises:
a platform monitoring module, configured to: receive or import a terminal monitoring package through the platform communication module, obtain an execution result of the terminal side application service logic, and display the execution result when required.

The beneficial results of the embodiments of the present invention are as follows:
1. In the embodiments of the present invention, all application service logic flows of the platform side and the terminal side are uniformly arranged in an arrangement area, so that the Internet of Things application service logic can be directly, integrally developed, without need of distinguishing whether it is terminal side application service logic or platform side application service logic, and the development efficiency is improved.
2. In the embodiments of the present invention, the arranged application service logic flows are uniformly simulated and debugged, and can be directly deployed on the terminal side and the platform side respectively after the debugging is passed, without need of repeatedly performing joint debugging, thereby saving the joint debugging step after online deployment, reducing the joint debugging time of the Internet of Things application on the platform side and the terminal side, and expanding the capabilities of the terminal, for example, running, upgrading, updating, testing, during the service running period.
3. When the Internet of Things application service logic is run on the terminal and the platform, respectively, the service logic execution conditions on the platform side and the terminal side can be displayed through the monitoring function, thereby facilitating the tracking and trouble shooting of the service logic running condition and guaranteeing the long-term steady running of the system.

### Brief Description of Drawings

FIG. 1 is a system diagram of an Internet of Things application scheme in the related art;
FIG. 2 is a flow chart of an integrated generation method for an Internet of Things terminal application according to one embodiment of the present invention;
FIG. 3 is a structure block diagram of an integrated generation system for an Internet of Things terminal application according to one embodiment of the present invention;
FIG. 4 is a system diagram of an Internet of Things application scheme in one embodiment of the present invention;
FIG. 5 is a schematic diagram of structure of a component module in one embodiment of the present invention;
FIG. 6 is a schematic diagram of structure of an arrangement module in one embodiment of the present invention;
FIG. 7 is an analysis flow chart aiming at terminal side application service logic in one embodiment of the present invention;
FIG. 8 is an analysis flow chart aiming at platform side application service logic in one embodiment of the present invention;
FIG. 9 is a schematic diagram of structure of a debugging module in one embodiment of the present invention;
FIG. 10 is an analysis flow chart before simulating and debugging in one embodiment of the present invention;
FIG. 11 is a schematic diagram of structure of a releasing module in one embodiment of the present invention;
FIG. 12 is a structure diagram of an Internet of Things terminal execution system in one embodiment of the present invention;
FIGS. 13-15 are schematic diagrams of the respective functional modules of an Internet of Things terminal execution system in one embodiment of the present invention;
FIG. 16 is a structure diagram of an Internet of Things platform execution system in one embodiment of the present invention;
FIGS. 17 and 18 are schematic diagrams of the respective functional modules of an Internet of Things platform execution system in one embodiment of the present invention.

### Preferred Embodiments of the Present Invention

The embodiments of the present invention are described in detail in conjunction with the accompanying drawings hereinafter. It should be understood that, in the case of not conflicting, the embodiments in the present application and features in these embodiments can be randomly combined with each other.

As shown in FIG. 2, FIG. 2 is a flow chart of an integrated generation method for an Internet of Things terminal application according to one embodiment of the present invention, including the following steps.

In step S101, a terminal component and a platform component that are required by an Internet of Things terminal application are provided.

In step S102, the terminal component and the platform component are arranged to form an application service process, and after the completion of arranging, platform side application service logic and terminal side application service logic are generated.

The above-mentioned method is used to uniformly arrange the terminal component and the platform component, to form a unified application service process, and automatically generate application service logic suitable for the terminal side and the platform side after the completion of arranging, so that the Internet of Things application service logic can be directly, integrally developed, without need of distinguishing whether it is terminal side application service logic or platform side application service logic, and the development efficiency is high.

After generating the terminal side application service logic and the platform side application service logic, an information channel is established between the two, to debug the two. After the completion of debugging, the terminal side application service logic and the platform side application service logic are released, the terminal side application service logic is deployed in a terminal execution system and the platform side application service logic is deployed in a platform execution system.

The advantage of such processing is that, because it is already debugged to an ideal state before the deployment, there is no need to debug again before going online formally, thereby saving the original joint debugging step, reducing the joint debugging time of the Internet of Things application on the platform side and the terminal side, and promoting competitiveness.

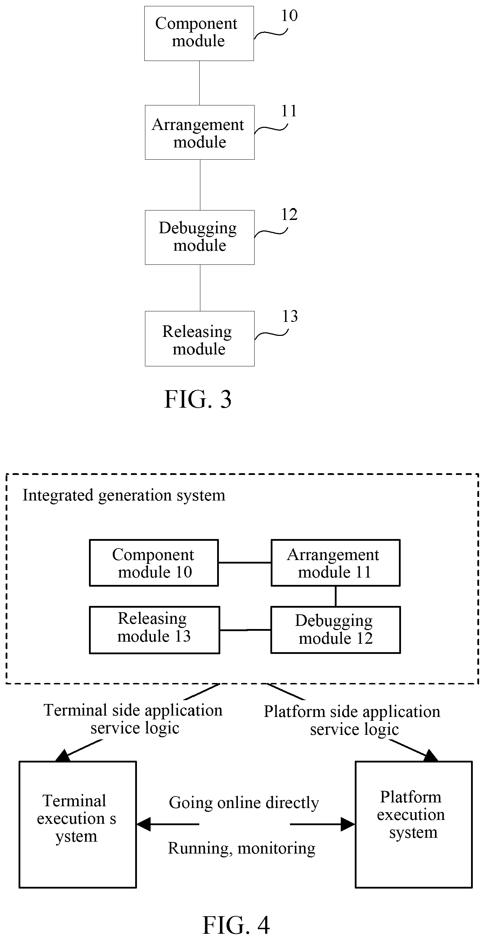

As shown in FIG. 3, FIG. 3 is a structure block diagram of an integrated generation system for an Internet of Things terminal application according to one embodiment of the present invention. The system includes a component module 10, an arrangement module 11, a debugging module 12 and a releasing module 13, wherein, the component module 10 is configured to: provide a terminal component and a corresponding platform component that are required by an Internet of Things terminal application; and the arrangement module 11 is configured to: arrange the terminal component and the platform component to form an application service process, and after the completion of arranging, generate platform side application service logic and terminal side application service logic; the debugging module 12 is configured to: establish an information channel between the platform side application service logic and the terminal side application service logic, to simulate and debug the platform side application service logic and the terminal side application service logic; and the releasing module 13 is configured to: after the completion of simulating and debugging of the debugging module 12, release the platform side application service logic and the terminal side application service logic.

The system is used to uniformly arrange, develop and debug the terminal side application service logic and the platform side application service logic, and release the terminal side application service logic and the platform side application service logic and deploy them in their own execution environments, realizing the integrative development of an Internet of Things terminal application.

As shown in FIG. 4, FIG. 4 is a block diagram of integral structure of an Internet of Things application system in one embodiment of the present invention, wherein the upper half is the integrated generation system used by the present embodiment, including the component module 10, the arrangement module 11, the debugging module 12 and the releasing module 13; and the lower half is execution environment of the terminal side application service logic and the platform side application service logic, including an Internet of Things terminal execution system and an Internet of Things platform execution system.

By using the Internet of Things application system of the present embodiment illustrated in FIG. 4, the integrated development and debugging of the terminal side application service logic and the platform side application service logic can be realized, and after the debugging is passed, the two parts of application service logic are deployed in the terminal execution system and the platform execution system, respectively, i.e. they can be used online directly.

The specific embodiments of the embodiments of the present invention are described in detail hereinafter.

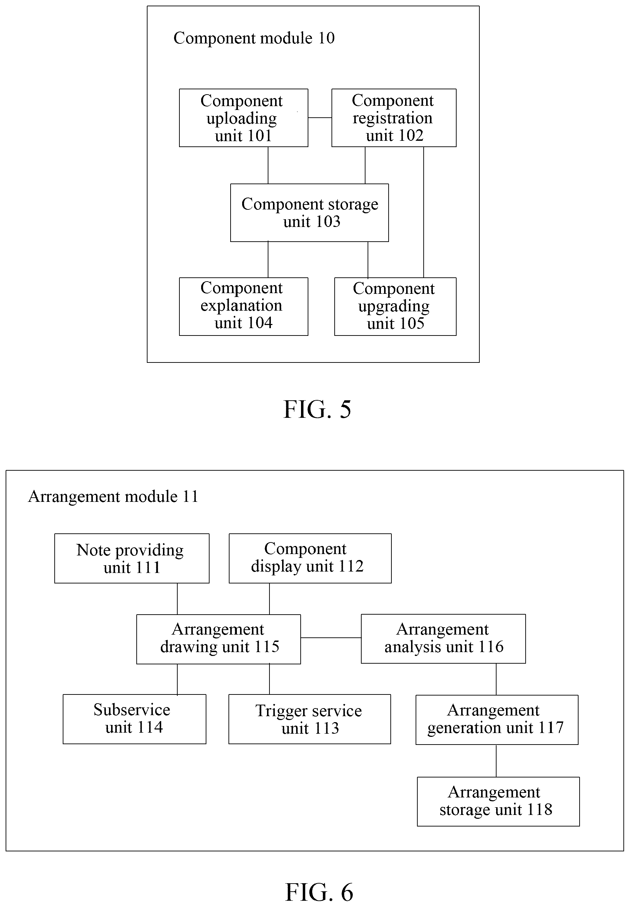

The component module 10 is configured to: provide a terminal component and a platform component that are required by an Internet of Things terminal application, and register, load and manage the components, etc., wherein, the components described here are the minimum functional units invoked in application logic, and possess the unique component Identifier (ID). In the embodiments of the present invention, the components are divided into two types, terminal component and platform component, according to attributes, wherein the terminal component is a component running only on the terminal side, and the platform component is a component running only on the platform side; the component module 10 executes the actions, such as, registering, loading and managing, to the terminal component and the platform component. As shown in FIG. 5, the component module 10 includes a component uploading unit 101, a component registration unit 102, a component storage unit 103, and a component explanation unit 104 and a component upgrading unit 105.

The component uploading unit 101 is configured to: receive a component package uploaded by the user, and verify the format and size of the component package, and after the verification is passed, upload the component package to the component storage unit 103, and notify the component registration unit 102 to perform loading work of the component package. The component package is a file set which satisfies certain regulations of the component, and generally is in the form of a compression package.

The component registration unit 102 is configured to: after receiving a component package loading notification message of the component uploading unit 101, read a component package required to register from the component storage unit 103. According to component description rules, valid verification is performed on a file set in the component package, and the file set includes: component metadata, a component method execution file, and a component method dependent file. The valid verification includes: verification to an execution method, an input parameter, and an output parameter. After the verification of the component package required to register is passed, the component package is converted into an organization form inside the component. In the component storage unit 103, the metadata, the execution file and the dependent file of the component are saved.

The component storage unit 103 can save the component package after the verification of the component uploading unit 101 is passed, and can save the metadata that and the component method execution file after the verification of the component registration unit 102 is passed.

The component explanation unit 104 can analyze the metadata of the component, for use by the arrangement module 11; can load the execution file and the dependent file of the component, for use by the debugging module 12; and can process a batch of component method dependent files and filter out the minimum dependent file set, for use by the releasing module 13.

The component upgrading unit 105 can replace components with the same component ID. After the component package of the component registration unit 102 passes the verification, the component upgrading unit 105 judges whether to be the same component according to the component ID at first; if yes, then the metadata, the execution file and the dependent file of the original component in the component storage unit 103 are removed, and the original component package is removed. And then the component registration unit 102 is notified to continue to perform conversion to the component package.

The arrangement module 11 is configured to: online arrange the Internet of Things application service logic flows. During the arrangement, it is not distinguished whether it is platform side service logic or terminal side service logic, and all service logic flows are arranged visually in the arrangement area. All nodes, components and trigger services appearing in the arrangement area are collectively referred to as elements, wherein, besides the end node and the trigger service, all elements only have one input connecting line; and all elements can have multiple output connecting lines. Wherein, the starting node is abstracted into an element only with output; the end node is abstracted into an element only with input; other nodes, trigger services, components, and subservices, etc. can all be abstracted into elements including input and output at the same time.

As shown in FIG. 6, the arrangement module 11 includes a node providing unit 111, a component display unit 112, a trigger service unit 113, a subservice unit 114, an arrangement drawing unit 115, an arrangement analysis unit 116, an arrangement generation unit 117 and an arrangement storage unit 118.

The node providing unit 111 provides the most basic arrangement elements of the application service logic, including: a starting node, an end node, an expression node, a compute node, and a communication node. Wherein, one service logic is triggered through one starting node, and is completed by one end node. The expression node defines a variable in the service logic flow. The compute node performs logical operation on the variable in the service logic flow, and said operation includes: arithmetic, generating a random number, obtaining the current time, and character string operation. The communication node is implied in the service logic flow, and is simulated or generated only during debugging or releasing. In addition, the node providing unit 111 is built in the system, except that the starting node and the end node are differentiated to be terminal type and platform type, other nodes are all universal, that is, other nodes are not differentiated to be terminal type and platform type, and the type of other nodes is common type.

The component display unit 112 is configured to: show the components managed by the component module 10. The component display unit 112 can invoke the component explanation unit 104 in the component module 10 to show the metadata of the component. The component display unit 112 can show the state, such as, increasing, deleting and upgrading, of the component.

The trigger service unit 113 is configured to: expand trigger conditions of the application service logic, encapsulate the components to form the trigger service. After the trigger service receives the relevant parameter, the service logic flow can be triggered immediately, to start the components to run. In addition, because the components have type classification of terminal side and platform side, the trigger service also has the classification of terminal side and platform side.

The subservice unit 114 invokes another service logic flow in one service logic flow, and the invoked party is called the subservice of the invoking party. The subservice unit 114 is configured to: show the service already existing in the component storage unit 103, to be arranged by the arrangement drawing unit 115 in the arrangement area.

The arrangement drawing unit 115 is configured to: provide the arrangement area of the service logic flow, arrange and graphically show the nodes, the components and the trigger service in the arrangement area, and connect the nodes, the components and the trigger service through flow connecting lines, to form a complete service logic flow. For example, the arrangement drawing unit 115 can regard the subservice as a special node, arrange the subservice in the arrangement area, and connect the subservice with the nodes, the components, and the trigger service related thereto, to form a complete service logic flow.

In addition, the arrangement drawing unit 115 is further configured to: maintain the nodes, the components, the trigger service and the subservice.

As to the maintenance of the nodes: the arrangement drawing unit 115 denominates the names of the nodes in the service logic flow; wherein, as to the expression node, the arrangement drawing unit 115 can define a variable required by the service logic flow; as to the compute node, the arrangement drawing unit 115 can select all kinds of variables defined by the expression, and can select all kinds of logical operations of the compute node.

As to the maintenance of the components: the arrangement drawing unit 115 denominates the names of the components in the service logic flow; and binds the input parameter of the components onto the variable defined by the expression node, and assigns the output parameter of the components onto the variable defined by the expression node.

As to the maintenance of the trigger service: the arrangement drawing unit 115 denominates the name of the trigger service in the service logic flow; and assigns the output parameter of the trigger service onto the variable defined by the expression node.

As to the maintenance of the subservice: the arrangement drawing unit 115 denominates the name of the subservice in the service logic flow; and binds the input parameter of the subservice onto the variable defined by the expression node, and assigns the output parameter of the subservice onto the variable defined by the expression node.

The arrangement analysis unit 116 can perform sequential analysis to the unified application service logic flow generated by the arrangement drawing unit 115 according to the direction of the flow connecting lines, and generates terminal side application service logic and platform side application service logic according to analysis and judgment to an element type.

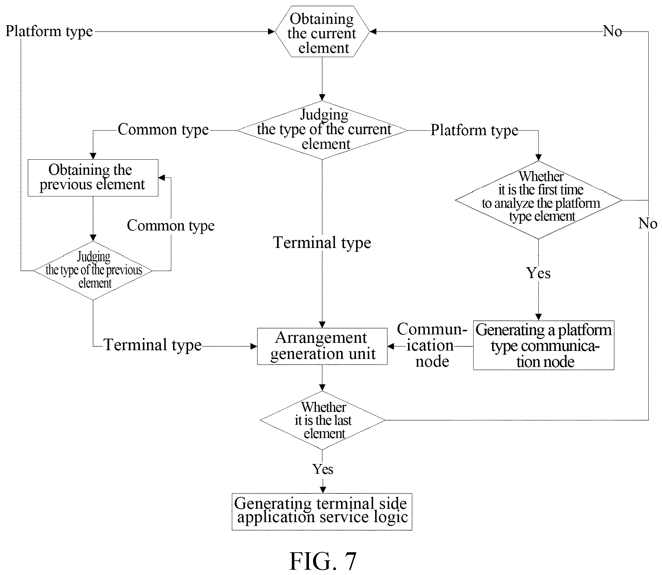

As shown in FIG. 7, FIG. 7 is an analysis flow chart aiming at terminal side application service logic in one embodiment of the present invention. The arrangement analysis unit 116 performs sequential analysis in the connecting line direction, and first judges the type of the current element. If the type of the current element is terminal type, then the information of the element is directly notified to the arrangement generation unit 117. If the type of the current element is platform type and it is the first time to analyze a platform-type element, then a terminal-type communication node is generated, and the node and the current element are notified to the arrangement generation unit 117, and a message interface of the communication node is determined according to the message type of the previous terminal-type element of the flow connecting line; if the element type is platform type but it is not the first time to analyze a platform element, then the element is jumped over to continue the analysis. If the current element type is common type, then the generation type of the current element is judged according to the type of the previous element of the flow connecting line. If the previous element type is terminal type, then the current element is notified to the arrangement generation unit 117; if the previous element type is platform type, then the element is jumped over to continue the analysis; if the previous element type is common type, then it continues to search and judge the further previous element of the flow connecting line.

After the completion of analyzing all elements of the whole service logic flow, the arrangement generation unit 117 generates terminal side application service logic according to the analysis result, and stores in the arrangement storage unit 118.

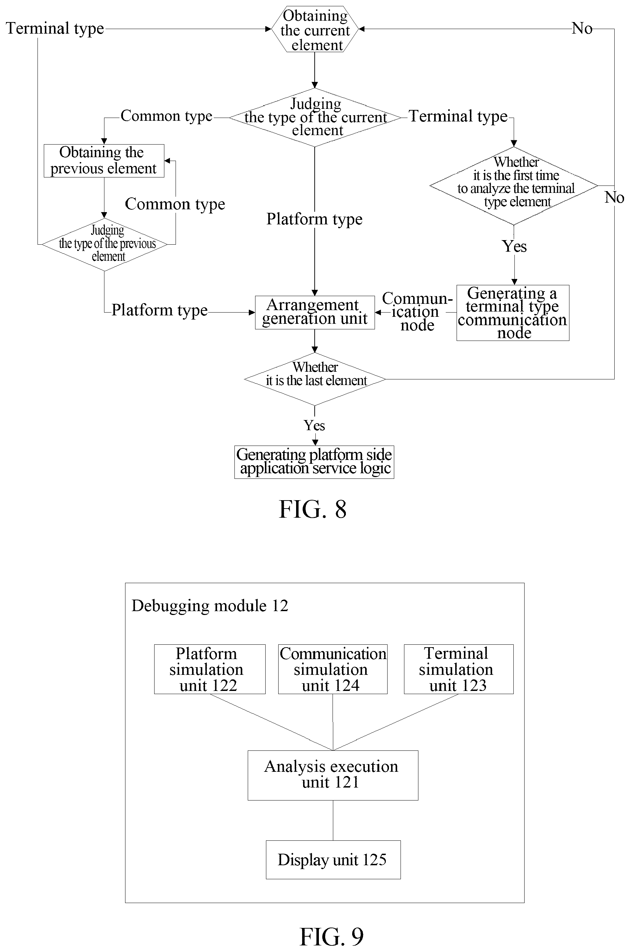

As shown in FIG. 8, FIG. 8 is an analysis flow chart aiming at platform side application service logic in one embodiment of the present invention. The arrangement analysis unit 116 performs sequential analysis in the connecting line direction. If the element type is platform type, then the element is directly notified to the arrangement generation unit 117. If the element type is terminal type and it is the first time to analyze a terminal-type element, then a platform-type communication node is generated, and the node is notified to the arrangement generation unit 117, and a message interface of the communication node is determined according to the message type of the previous platform-type element of the flow connecting line; if the element type is terminal type but it is not the first time to analyze a terminal element, then the element is jumped over to continue the analysis. If the current element type is common type, then the generation type of the current element is judged according to the type of the previous element of the flow connecting line. If the previous element type is platform type, then the current element is notified to the arrangement generation unit 117; if the previous element type is terminal type, then the element is jumped over to continue the analysis; if the previous element type is common type, then it continues to search and judge the further previous element of the flow connecting line.

After the completion of analyzing all elements of the whole service logic flow, the arrangement generation unit 117 generates platform side application service logic according to the analysis result, and stores in the arrangement storage unit 118.

The arrangement storage unit 118 is configured to: store the metadata of the terminal side application service logic and the platform side application service logic generated by the arrangement generation unit 117, and the metadata includes: service logic flow description information, relative position information of the element in the arrangement area and own information of the element.

In addition, if the current element belongs to the subservice, then the arrangement analysis unit 116 reads various metadata of the subservice logic flow, and starts the analysis to the subservice logic flow according to the subservice logic flow description information, and the analysis method is the same as above.

The debugging module 12 is configured to: simulate and debug the terminal side application service logic and the platform side application service logic. As shown in FIG. 9, the debugging module 12 includes: an analysis execution unit 121, a platform simulation unit 122, a terminal simulation unit 123, a communication simulation unit 124 and a display unit 125.

The analysis execution unit 121 reads various metadata of the terminal side application service logic and the platform side application service logic from the arrangement storage unit 118 of the arrangement module 11, and starts the simulating and debugging with respect to the two parts of application service logic according to the service logic flow description information. If the service logic flow is started with the starting node, then the starting and debugging process is triggered immediately; if the service logic flow is started with the trigger service, then the starting and debugging process is triggered after the user inputs the trigger service parameter. The analysis execution unit 121 can analyze the relative positions of various elements in the service logic flow, and sends to the display unit 125 to display; the analysis execution unit 121 further analyzes various elements, notifies the terminal simulation unit 123 to simulate, receives a return result of the terminal simulation unit 123, and notifies the display unit 125 of the return result; and the analysis execution unit 121 further analyzes various elements, notifies the platform simulation unit 122 to simulate, receives a return result of the platform simulation unit 122, and notifies the display unit 125 of the return result.

The platform simulation unit 122 can simulate the actual execution situation of the platform side environment, can perform simulation execution to the expression node, the compute node, and the platform side component, and returns the execution result.

The terminal simulation unit 123 can simulate the actual execution situation of the terminal side environment, can perform simulation execution to the expression node, the compute node, and the terminal side component, and returns the execution result.

The communication simulation unit 124 can simulate the communication protocol and communication interface between the terminal side and the platform side. The communication protocol and the communication interface both are consistently concerted in advance by the terminal and the platform in the Internet of Things application. When the communication simulation unit 124 receives a communication simulation request from the terminal side to the platform side, the communication interface from the terminal side to the platform side is simulated; when the communication simulation unit 124 receives a communication simulation request from the platform side to the terminal side, the communication interface from the platform side to the terminal side is simulated.

The display unit 125 can read the relative positions of various elements of the application service logic flow in the arrangement area, and displays in a debugging area; further can receive the return results of the terminal simulation unit 123, the platform simulation unit 122 and the communication simulation unit 124; and configures different colors for the element in the debugging area respectively to distinguish under the circumstances that the returned execution results are normal, abnormal or unexecuted. And then necessary adjustment is made to the application service logic of the terminal side and the platform side according to the execution results, to make the two matched.

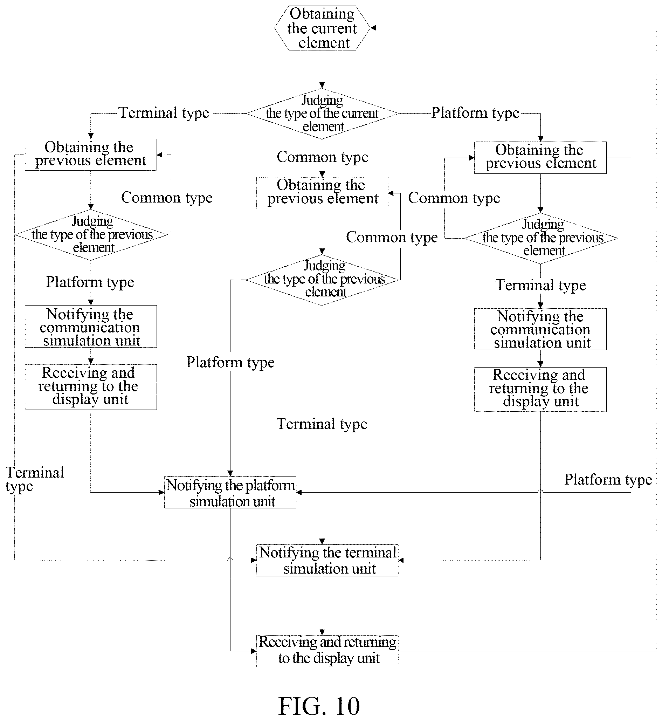

FIG. 10 is a flow chart of simulating and debugging in one embodiment of the present invention. The analysis execution unit 121 analyzes various elements, and the method is to judge the type of the current element. As shown in FIG. 10, if the element type is common type, the simulation execution unit corresponding to the current element is judged according to the type of the previous element of the flow connecting line; wherein, if the type of the previous element is platform type, then the platform simulation unit is notified to simulate; if the type of the previous element is terminal type, then the terminal simulation unit is notified to simulate; if the type of the previous element is common type, then it continues to search and judge the further previous element of the flow connecting line.

As shown in FIG. 10, if the type of the current element is terminal type, the simulation execution unit of the current element is judged according to the type of the previous element of the flow connecting line. If the type of the previous element is terminal type, then the terminal simulation unit is directly notified to simulate; if the type of the previous element is platform type, then the communication simulation unit is first notified to simulate, the return result of the communication simulation result is received, and the return result is notified to the display unit, and then the terminal simulation unit is further notified to simulate; if the type of the previous element is common type, then it continues to search and judge the further previous element of the flow connecting line.

As shown in FIG. 10, (iii) if the type of the current element is platform type, then the simulation execution unit of the current element is judged according to the type of the previous element of the flow connecting line. If the type of the previous element is platform type, then the platform simulation unit is directly notified to simulate; if the type of the previous element is terminal type, then the communication simulation unit is first notified to simulate, the return result of the communication simulation result is received, and the return result is notified to the display unit, and then the platform simulation unit is further notified to simulate; if the type of the previous element is common type, then it continues to search and judge the further previous element of the flow connecting line.

In addition, if the current element belongs to the subservice, then the metadata of the subservice logic flow are read, and debugging to the subservice logic flow is started according to subservice logic flow description information.

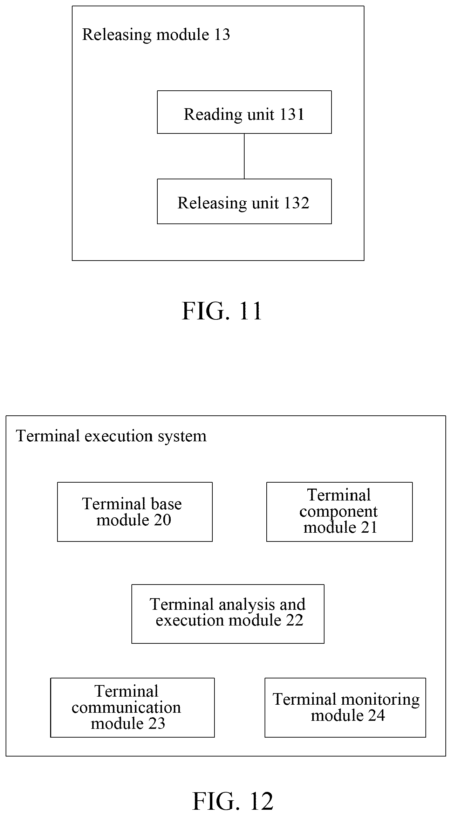

The releasing module 13 is configured to: release the already stored terminal side application service logic and platform side application service logic. As shown in FIG. 11, the releasing module 13 includes a reading unit 131 and a releasing unit 132.

The reading unit 131 can read the metadata of the terminal side application service logic and the platform side application service logic from the arrangement storage unit 118 of the arrangement module 11.

The releasing unit 132 deploys the terminal side application service logic and the platform side application service logic sent by the reading unit 131 into the terminal execution environment and the platform execution environment, respectively, and uses them online after the completion of deployment. The two parts of logic can be directly, correspondingly deployed into the terminal execution environment and the platform execution environment, and the two parts of logic can also be processed first, to generate a terminal side service logic application package and a platform side service logic application package, and then releasing and deploying are performed. Here, the terminal side service logic application package and the platform side service logic application package together are service logic of the whole Internet of Things application.

During releasing, what the terminal side application service logic aims at is the terminal execution system, and the terminal execution system can be installed in different terminal systems, for example, iphone Operation System (iOS)/Android, etc.; what the platform application service logic aims at is the platform execution system, and the platform execution system can be installed in different platform systems, for example, Windows/Linux, etc..

The embodiments of the present invention further provide an Internet of Things terminal execution system, and as shown in FIG. 12, the system includes: a terminal base module 20, a terminal component module 21, a terminal analysis and execution module 22, a terminal communication module 23 and a terminal monitoring module 24.

The terminal base module 20 is configured to: provide an interface to receive the terminal side application service logic, and perform data conversion; the terminal component module 21 is configured to: load a component required by the terminal side application service logic, and execute and maintain the component; the terminal analysis and execution module 22 is configured to: analyze and trigger the terminal side application service logic and start the service logic flow; the terminal communication module 23 is configured to: perform communication between the terminal and the platform, and send the result of the terminal executing the terminal side application service logic; and the terminal monitoring module 24 is configured to: monitor the execution situation of the terminal side application service logic, and export and display the execution result.

Wherein, three trigger modes can be provided for the terminal side application service logic: (1) being triggered by the starting node, (2), being triggered by a message command of the platform, and (3) being triggered by the terminal gathering data. If the terminal side application service logic is triggered by the starting node, it is triggered immediately after starting; if it is triggered by a message command of the platform, it is triggered after receiving the message command of the platform; and if it is triggered by the terminal gathering data, it is triggered after receiving the terminal side relevant parameter of the trigger service.

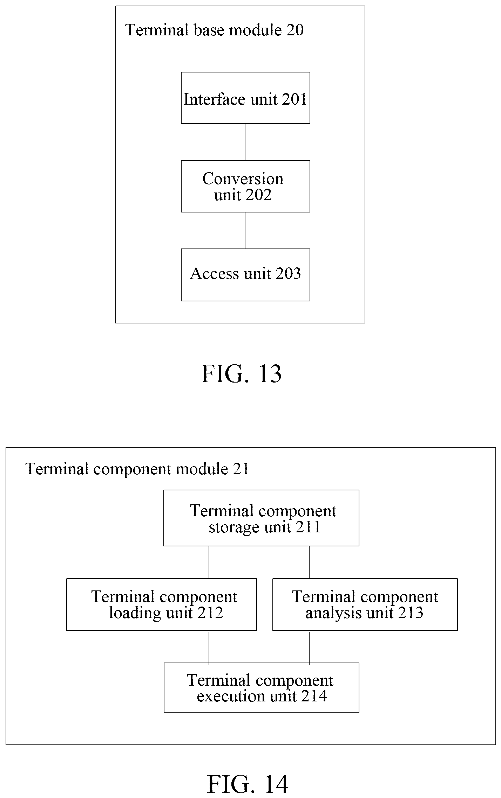

As shown in FIG. 13, FIG. 13 is a terminal base module 20 of one embodiment of the present invention, including an interface unit 201, a conversion unit 202 and an access unit 203.

The interface unit 201 can provide a unified terminal access interface for all elements, receive data sent by the interface invoking party, and send the data to the conversion unit in downlink according to the interface type; and can receive the trigger data of the conversion unit 202 and notify the interface invoking party to receive.

The conversion unit 202 can receive the data sent by the interface unit 201 in downlink, perform data flow transcoding according to the terminal operating system type, and through the access unit 203, access the terminal device, or access the platform execution system, to make the trigger service possess two modes of being triggered after the terminal gathers data and being triggered by a message command of the platform; and can receive the information of the terminal device through the access unit 203, perform transcoding to the data flow, and send to the interface unit 201.

The access unit 203 can access various functions provided by the terminal device and can communicate with the conversion unit 202 on the terminal operating system.

As shown in FIG. 14, FIG. 14 is a terminal component module 21 of one embodiment of the present invention, including: a terminal component storage unit 211, a terminal component loading unit 212, a terminal component analysis unit 213 and a terminal component execution unit 214.

The terminal component storage unit 211 stores the metadata, the execution file and the dependent file of the component.

The terminal component loading unit 212 can load the terminal type component in the integrated application development environment, and increase, delete and upgrade the component through the component ID; and can store the component in the terminal component storage unit 211.

The terminal component analysis unit 213 can analyze the component metadata in the terminal component storage unit 211, and notify the terminal component execution unit 214 to operate the component.

The terminal component execution unit 214 can operate the particular function of the component through the execution file and the dependent file of the component. Because the component is developed based on the terminal base module 20 of the terminal, the terminal component execution unit 214 will send the component data to the interface unit 201 of the terminal base module 20.

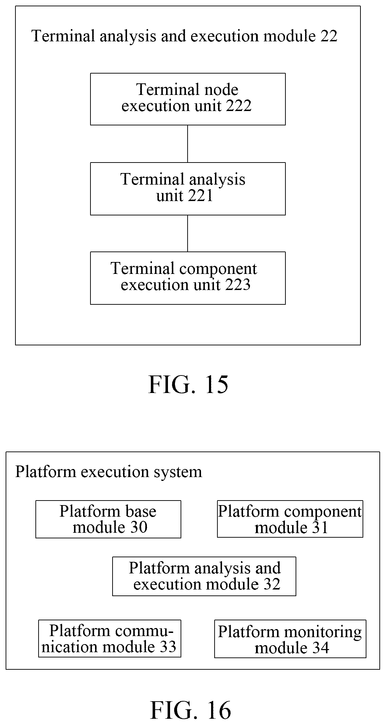

As shown in FIG. 15, FIG. 15 is a terminal analysis and execution module 22 of one embodiment of the present invention, and the terminal analysis and execution module 22 is configured to: analyze and execute the terminal side application logic execution package. The terminal analysis and execution module 22 includes: a terminal analysis unit 221, a terminal node execution unit 222 and a terminal component execution unit 223.

The terminal analysis unit 221 can analyze various elements sequentially according to terminal side service logic flow description information. If the element is a node, then the node execution unit is invoked to run and the running result is received; if the element is a component, then the component execution unit is invoked to execute, and the running result is received.

The terminal analysis unit 221 is configured to: when the service logic flow is started by a starting node, then the terminal side application logic is triggered immediately; when the service logic flow is started by a terminal trigger service, then the interface unit 201 of the terminal base module 20 is monitored; the terminal side application logic is triggered when there is an input condition of the trigger service and the relevant parameter is received.

When the terminal side is started to execute the monitoring function, the terminal analysis unit 221 can send the information of the element and the running result to the platform execution environment through the terminal communication module 23.

The terminal node execution unit 222 can execute the logic of node, and return the running result.

The terminal component execution unit 223 can invoke the terminal component analysis unit 213 of the terminal component module 21, execute the function of the component, and return the running result.

The terminal communication module 23 is configured to: perform communication between the terminal and the platform. The communication protocol and the communication interface provided by the terminal communication module 23 both are consistently concerted by the terminal and the platform in the Internet of Things application. The terminal communication module 23 uses the unified interface provided by the interface unit 201 of the terminal base module 20 when communicating with the platform execution environment.

The terminal monitoring module 24 is configured to: monitor the execution situation of the terminal side application service logic, and export the execution result for display. For example, if the terminal communication module 23 meets communication link exception, then the terminal monitoring module 24 can buffer the execution result of the terminal and export the execution result in the form of terminal monitoring package.

The above-mentioned Internet of Things terminal execution system is utilized to receive, analyze and execute the terminal side application service logic, and monitor the execution situation, the respective component information in the terminal side application service logic and running result are sent to the platform, to realize the Internet of Things terminal application.

In addition, the embodiments of the present invention further provide an Internet of Things platform execution system, and as shown in FIG. 16, the system includes: a platform base module 30, a platform component module 31, a platform analysis and execution module 32, a platform communication module 33 and a platform monitoring module 34.

The platform base module 30 is configured to: provide an interface to receive the platform side application service logic, and perform data conversion; the platform component module 31 is configured to: load a component required by the platform side application service logic, and execute and maintain the component; the platform analysis and execution module 32 is configured to: analyze and trigger the platform side application service logic; the platform communication module 33 is configured to: perform communication between the terminal and the platform, and receive the result of the terminal executing the terminal side application service logic; and the platform monitoring module 34 is configured to: receive or import the terminal monitoring package through the platform communication module 33, and obtain and display the execution result of the terminal side application service logic.

Wherein, two trigger modes can be provides for the platform side application service logic: (1) being triggered by the starting node, (2), being triggered by a message command of the terminal. If the platform side application service logic is triggered by the starting node, it is triggered immediately after starting; if the platform side application service logic is triggered by a message command of the terminal, the platform side application service logic is triggered after receiving the message command of the terminal.

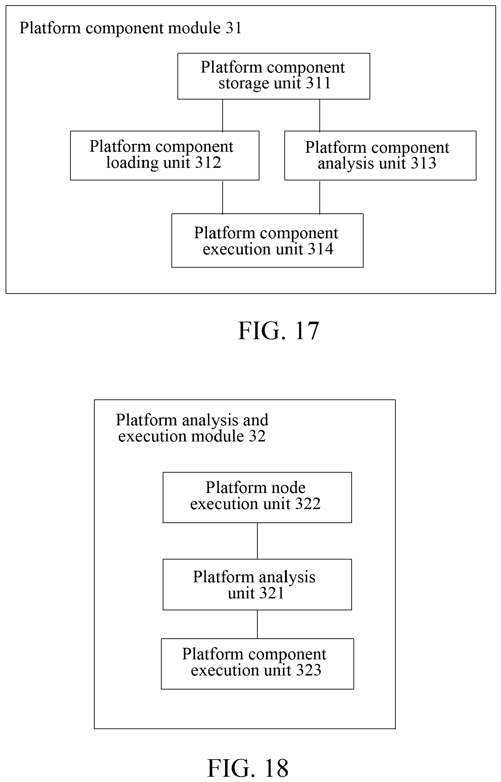

As shown in FIG. 17, the platform component module 31 includes: a platform component storage unit 311, a platform component loading unit 312, a platform component analysis unit 313 and a platform component execution unit 314.

The platform component storage unit 311 stores the metadata, the execution file and the dependent file of the component.

The platform component loading unit 312 can load the platform-type component in the integrated application development environment, and increase, delete and upgrade the component through the component ID; and can save the component in the platform component storage unit 311.

The platform component analysis unit 313 can analyze the component metadata in the platform component storage unit 311, and notify the platform component execution unit 314 to operate the component.

The platform component execution unit 314 can operate the particular function of the component through the execution file and the dependent file of the component.

As shown in FIG. 18, the platform analysis and execution module 32 includes a platform analysis unit 321, a platform node execution unit 322 and a platform component execution unit 323.

The platform analysis unit 321 can analyze various elements sequentially according to the description information of platform side application service logic. If the element is a node, then the platform node execution unit 322 is invoked to run and the running result is received; if the element is a component, then the platform component execution unit 323 is invoked to run, and the running result is received. The platform analysis unit 321 sends the two parts of running results to the platform monitoring module 34.

The platform communication module 33 is configured to: perform communication between the platform and the terminal, and can start the platform side application service logic through the trigger service after receiving an information command of the terminal. The platform communication module 33 further receives the running result of the terminal side application service logic from the terminal and sends the running result to the platform monitoring module 34. The communication protocol and the communication interface provided by the platform communication module 33 both are consistently concerted by the platform and the terminal in the Internet of Things application.

The platform monitoring module 34 can receive or import the terminal monitoring package through the platform communication module 33, obtain the execution result of the terminal side application service logic, and then combine with the execution result of the platform side application service logic from the platform analysis unit 321 and the platform communication module 33 to display the execution results by the graphic mode in the monitoring area, and perform differential display by different colors in the monitoring area under the circumstances that the returned execution results are usual, unusual, unexecuted, etc.

By utilizing the above-mentioned Internet of Things platform execution system, the execution result of the terminal side application service logic can be received, in combination with the execution situation of the platform side application service logic, to realize the execution and monitoring functions of the integrated service logic.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limited to any specific form of the combination of the hardware and software.

The above description is detailed explanation to the embodiments of the present invention in conjunction with the preferred embodiments, while it cannot be determined that the execution of the embodiments of the present invention is only limited to these explanations. For those skilled in the art to which the present invention belongs, several simple inferences or replacements also can be made, and all the inferences or replacements should be regarded to be embodied in the scope of the accompanying claims.

### Industrial Applicability

In the embodiments of the present invention, the development efficiency is improved; the joint debugging time of the platform side and the terminal side of the Internet of Things application is reduced, the capacities, such as, running, upgrading, updating, testing, of the terminal during the service running period are expanded; and the tracking and trouble shooting of the service logic running situation are facilitated, guaranteeing the long-term steady running of the system.

## Claims

1. An integrated generation method for an Internet of Things terminal application, comprising:
providing a terminal component and a platform component that are required by the Internet of Things terminal application (S101);
arranging the terminal component and the platform component to form an application service process, and after completing the arrangement, generating a platform side application service logic and a terminal side application service logic (S102); and
after generating the terminal side application service logic and the platform side application service logic, establishing a communication channel between the terminal side application service logic and the platform side application service logic, to simulate and debug the terminal side application service logic and the platform side application service logic;
**characterized by** that,
the step of simulating and debugging the terminal side application service logic and the platform side application service logic comprises:
simulating a running condition of the terminal side application service logic and a running condition of the platform side application service logic through the communication channel; and
adjusting the terminal side application service logic and the platform side application service logic according to the running condition.

2. The method according to claim 1, wherein,
said arrangement is performed in an arrangement area, and an arranged object comprises the following elements: a node, the terminal component, the platform component, a trigger service formed by encapsulating the terminal component and a trigger service formed by encapsulating the platform component.

3. The method according to claim 2, wherein, the step of generating a terminal side application service logic and a platform side application service logic comprises:
generating the terminal side application service logic and the platform side application service logic according to analysis and judgment of an element type.

4. The method according to claim 1, further comprising:
before simulating the running condition of the terminal side application service logic and the running condition of the platform side application service logic, judging the type of a current element, and using the terminal side application service logic to simulate when the current element is of a terminal type; using the platform side application service logic to simulate when the current element is of a platform type; and judging according to the type of a previous element of a flow connecting line when the current element is of a common type.

5. The method according to claim 1, further comprising:
after completing said simulating and debugging, releasing the terminal side application service logic and the platform side application service logic;
wherein, the step of releasing the terminal side application service logic and the platform side application service logic comprises:
directly deploying the terminal side application service logic into a terminal execution system and deploying the platform side application service logic into a platform execution system, or, first processing the terminal side application service logic and the platform side application service logic to generate a terminal side service logic application package and a platform side service logic application package, and then deploying the terminal side service logic application package into the terminal execution system and deploying the platform side service logic application package into the platform execution system.

6. An integrated generation system for an Internet of Things terminal application, comprising:
a component module (10), configured to: provide a terminal component and a platform component that are required by the Internet of Things terminal application;
an arrangement module (11), configured to: arrange the terminal component and the platform component to form an application service process, and after completing the arrangement, generate a terminal side application service logic and a platform side application service logic; and
a debugging module (12), configured to: establish an information channel between the terminal side application service logic and the platform side application service logic, to simulate and debug the terminal side application service logic and the platform side application service logic;
**characterized by** that,
the debugging module (12) is configured to simulate and debug the terminal side application service logic and the platform side application service logic by means of:
simulating a running condition of the terminal side application service logic and a running condition of the platform side application service logic through a communication channel; and adjusting the terminal side application service logic and the platform side application service logic according to the running condition.

7. The system according to claim 6, wherein,
the arrangement module (11) provides an arrangement area, said arrangement is performed in the arrangement area, and an arranged object comprises the following elements: a node, the terminal component, the platform component, a trigger service formed by encapsulating the terminal component and a trigger service formed by encapsulating the platform component.

8. The system according to claim 7, wherein,
the arrangement module (11) is configured to generate a terminal side application service logic and a platform side application service logic by means of:
generating the terminal side application service logic and the platform side application service logic according to analysis and judgment of an element type.

9. The system according to claim 6, wherein,
the debugging module (12) is further configured to: before simulating the running condition of the terminal side application service logic and the running condition of the platform side application service logic, judge the type of a current element, and use the terminal side application service logic to simulate when the current element is of a terminal type; use the platform side application service logic to simulate when the current element is of a platform type; and judge according to the type of a previous element of a flow connecting line when the current element is of a common type.

10. The system according to claim 6, further comprises:
a releasing module (13), configured to: after completing the simulating and debugging by the debugging module, release the terminal side application service logic and the platform side application service logic;
wherein, the releasing module (13) is configured to release the terminal side application service logic and the platform side application service logic by means of:
directly deploying the terminal side application service logic into a terminal execution system and deploying the platform side application service logic into a platform execution system, or, first processing the terminal side application service logic and the platform side application service logic to generate a terminal side service logic application package and a platform side service logic application package, and then deploying the terminal side service logic application package into the terminal execution system and deploying the platform side service logic application package into the platform execution system.

## Patentansprüche

1. Integriertes Generierungsverfahren für eine Internet-of-Things-Endgeräte-Anwendung, das Folgendes umfasst:
Bereitstellen einer Endgerät-Komponente und einer Plattform-Komponente, die durch die Internet-of-Things-Endgeräte-Anwendung benötigt werden (S101),
Anordnen der Endgerät-Komponente und der Plattform-Komponente, um einen Anwendungsdienstprozess zu bilden, und nach Vollendung des Anordnens, Generieren einer plattformseitigen Anwendungsdienstlogik und einer endgeräteseitigen Anwendungsdienstlogik (S102); und
nach dem Generieren der endgeräteseitigen Anwendungsdienstlogik und der plattformseitigen Anwendungsdienstlogik, Herstellen eines Kommunikationskanals zwischen der endgeräteseitigen Anwendungsdienstlogik und der plattformseitigen Anwendungsdienstlogik, um die endgeräteseitige Anwendungsdienstlogik und die plattformseitige Anwendungsdienstlogik zu simulieren und zu debuggen, **dadurch gekennzeichnet, dass**
der Schritt des Simulierens und Debuggens der endgeräteseitigen Anwendungsdienstlogik und der plattformseitigen Anwendungsdienstlogik Folgendes umfasst:
Simulieren eines Arbeitszustands der endgeräteseitigen Anwendungsdienstlogik und eines Arbeitszustands der plattformseitigen Anwendungsdienstlogik durch den Kommunikationskanal; und
Justieren der endgeräteseitigen Anwendungsdienstlogik und der plattformseitigen Anwendungsdienstlogik gemäß dem Arbeitszustand.

2. Verfahren nach Anspruch 1, wobei
das Anordnen in einem Anordnungsbereich ausgeführt wird, und ein angeordnetes Objekt die folgenden Elemente umfasst: einen Knoten, die Endgerät-Komponente, die Plattform-Komponente, einen Auslöserdienst, der durch Verkapseln der Endgerät-Komponente gebildet wird, und einen Auslöserdienst, der durch Verkapseln der Plattform-Komponente gebildet wird.

3. Verfahren nach Anspruch 2, wobei der Schritt des Generierens einer endgeräteseitigen Anwendungsdienstlogik und einer plattformseitigen Anwendungsdienstlogik Folgendes umfasst:
Generieren der endgeräteseitigen Anwendungsdienstlogik und der plattformseitigen Anwendungsdienstlogik gemäß Analyse und Beurteilung eines Element-Typs.

4. Verfahren nach Anspruch 1, das des Weiteren Folgendes umfasst:
des Simulieren des Arbeitszustands der endgeräteseitigen Anwendungsdienstlogik und des Arbeitszustands der plattformseitigen Anwendungsdienstlogik, Beurteilen des Typs eines momentanen Elements, und Verwenden der endgeräteseitigen Anwendungsdienstlogik, um zu simulieren, wann das momentane Element von einem Endgeräte-Typ ist; Verwenden der plattformseitigen Anwendungsdienstlogik, um zu simulieren, wann das momentane Element von einem Plattform-Typ ist; und Beurteilen, gemäß dem Typ eines vorherigen Elements einer Flussverbindungsleitung, wann das momentane Element von einem gemeinsamen Typ ist.

5. Verfahren nach Anspruch 1, das des Weiteren Folgendes umfasst:
nach dem Vollenden des Simulierens und Debuggens, Freigeben der endgeräteseitigen Anwendungsdienstlogik und der plattformseitigen Anwendungsdienstlogik,
wobei der Schritt des Freigebens der endgeräteseitigen Anwendungsdienstlogik und der plattformseitigen Anwendungsdienstlogik Folgendes umfasst:
direktes Anwenden der endgeräteseitigen Anwendungsdienstlogik in einem Endgeräte-Ausführungssystem und Anwenden der plattformseitigen Anwendungsdienstlogik in einem Plattform-Ausführungssystem, oder zuerst Verarbeiten der endgeräteseitigen Anwendungsdienstlogik und der plattformseitigen Anwendungsdienstlogik zum Generieren eines endgeräteseitigen Dienstlogik-Anwendungspaketes und eines plattformseitigen Dienstlogik-Anwendungspaketes, und dann Anwenden des endgeräteseitigen Dienstlogik-Anwendungspaketes in dem Endgeräte-Ausführungssystem und Anwenden des plattformseitigen Dienstlogik-Anwendungspaketes in dem Plattform-Ausführungssystem.

6. Integriertes Generierungssystem für eine Internet-of-Things-Endgeräte-Anwendung, das Folgendes umfasst:
ein Komponentenmodul (10), das konfiguriert ist zum: Bereitstellen einer Endgerät-Komponente und einer Plattform-Komponente, die durch die Internet-of-Things-Endgeräte-Anwendung benötigt werden, ein Anordnungsmodul (11), das konfiguriert ist zum: Anordnen der Endgerät-Komponente und der Plattform-Komponente, um einen Anwendungsdienstprozess zu bilden, und nach Vollendung des Anordnens, Generieren einer endgeräteseitigen Anwendungsdienstlogik und einer plattformseitigen Anwendungsdienstlogik; und
ein Debugging-Modul (12), das konfiguriert ist zum: Herstellen eines Informationskanals zwischen der endgeräteseitigen Anwendungsdienstlogik und der plattformseitigen Anwendungsdienstlogik, um die endgeräteseitige Anwendungsdienstlogik und die plattformseitige Anwendungsdienstlogik zu simulieren und zu debuggen, **dadurch gekennzeichnet, dass**
das Debugging-Modul (12) dafür konfiguriert ist, die endgeräteseitige Anwendungsdienstlogik und die plattformseitige Anwendungsdienstlogik zu simulieren und zu debuggen mittels:
Simulieren eines Arbeitszustands der endgeräteseitigen Anwendungsdienstlogik und eines Arbeitszustands der plattformseitigen Anwendungsdienstlogik durch einen Kommunikationskanal; und Justieren der endgeräteseitigen Anwendungsdienstlogik und der plattformseitigen Anwendungsdienstlogik gemäß dem Arbeitszustand.

7. System nach Anspruch 6, wobei
das Anordnungsmodul (11) einen Anordnungsbereich bereitstellt, das Anordnen in dem Anordnungsbereich ausgeführt wird, und ein angeordnetes Objekt die folgenden Elemente umfasst: einen Knoten, die Endgerät-Komponente, die Plattform-Komponente, einen Auslöserdienst, der durch Verkapseln der Endgerät-Komponente gebildet wird, und einen Auslöserdienst, der durch Verkapseln der Plattform-Komponente gebildet wird.

8. System nach Anspruch 7, wobei
das Anordnungsmodul (11) dafür konfiguriert ist, eine endgeräteseitige Anwendungsdienstlogik und eine plattformseitige Anwendungsdienstlogik zu generieren mittels:
Generieren der endgeräteseitigen Anwendungsdienstlogik und der plattformseitigen Anwendungsdienstlogik gemäß Analyse und Beurteilung eines Element-Typs.

9. System nach Anspruch 6, wobei
das Debugging-Modul (12) des Weiteren für Folgendes konfiguriert ist:
vor dem Simulieren des Arbeitszustands der endgeräteseitigen Anwendungsdienstlogik und des Arbeitszustands der plattformseitigen Anwendungsdienstlogik, Beurteilen des Typs eines momentanen Elements, und Verwenden der endgeräteseitigen Anwendungsdienstlogik, um zu simulieren, wann das momentane Element von einem Endgeräte-Typ ist; Verwenden der plattformseitigen Anwendungsdienstlogik, um zu simulieren, wann das momentane Element von einem Plattform-Typ ist; und Beurteilen, gemäß dem Typ eines vorherigen Elements einer Flussverbindungsleitung, wann das momentane Element von einem gemeinsamen Typ ist.

10. System nach Anspruch 6, das des Weiteren Folgendes umfasst:
ein Freigabemodul (13), das konfiguriert ist zum: Freigeben - nach dem Vollenden des Simulierens und Debuggens durch das Debugging-Modul - der endgeräteseitigen Anwendungsdienstlogik und der plattformseitigen Anwendungsdienstlogik,
wobei das Freigabemodul (13) dafür konfiguriert ist, die endgeräteseitige Anwendungsdienstlogik und die plattformseitige Anwendungsdienstlogik freizugeben mittels:
direktem Anwenden der endgeräteseitigen Anwendungsdienstlogik in einem Endgeräte-Ausführungssystem und Anwenden der plattformseitigen Anwendungsdienstlogik in einem Plattform-Ausführungssystem, oder zuerst Verarbeiten der endgeräteseitigen Anwendungsdienstlogik und der plattformseitigen Anwendungsdienstlogik zum Generieren eines endgeräteseitigen Dienstlogik-Anwendungspaketes und eines plattformseitigen Dienstlogik-Anwendungspaketes, und dann Anwenden des endgeräteseitigen Dienstlogik-Anwendungspaketes in dem Endgeräte-Ausführungssystem und Anwenden des plattformseitigen Dienstlogik-Anwendungspaketes in dem Plattform-Ausführungssystem.

## Revendications

1. Procédé de génération intégrée pour une application de terminal de l'Internet des objets, comprenant :
la fourniture d'un composant de terminal et d'un composant de plate-forme qui sont exigés par l'application de terminal de l'Internet des objets (S101) ;
l'agencement du composant de terminal et du composant de plate-forme pour former un processus de service d'application et, après la réalisation de l'agencement, la génération d'une logique de service d'application côté plate-forme et d'une logique de service d'application côté terminal (S102) ; et
après la génération de la logique de service d'application côté terminal et de la logique de service d'application côté plate-forme, l'établissement d'un canal de communication entre la logique de service d'application côté terminal et la logique de service d'application côté plate-forme, pour simuler et déboguer la logique de service d'application côté terminal et la logique de service d'application côté plate-forme ;
**caractérisé en ce que**
l'étape de la simulation et le débogage de la logique de service d'application côté terminal et de la logique de service d'application côté plate-forme comprend :
la simulation d'une condition d'exécution de la logique de service d'application côté terminal et d'une condition d'exécution de la logique de service d'application côté plate-forme par l'intermédiaire du canal de communication ; et
l'ajustement de la logique de service d'application côté terminal et de la logique de service d'application côté plate-forme en fonction de la condition d'exécution.

2. Procédé selon la revendication 1, dans lequel
ledit agencement est réalisé dans une zone d'agencement, et un objet agencé comprend les éléments suivants : un noeud, le composant de terminal, le composant de plate-forme, un service de déclenchement formé par l'encapsulation du composant de terminal et un service de déclenchement formé par l'encapsulation du composant de plate-forme.

3. Procédé selon la revendication 2, dans lequel l'étape de la génération d'une logique de service d'application coté terminal et d'une logique de service d'application coté plate-forme comprend :
la génération de la logique de service d'application côté terminal et de la logique de service d'application côté plate-forme en fonction d'une analyse et d'un jugement d'un type d'élément.

4. Procédé selon la revendication 1, comprenant en outre :
avant la simulation de la condition d'exécution de la logique de service d'application côté terminal et de la condition d'exécution de la logique de service d'application côté plate-forme, le jugement du type d'un élément actuel, et l'utilisation de la logique de service d'application côté terminal pour simuler quand l'élément actuel est d'un type de terminal ; l'utilisation de la logique de service d'application côté plate-forme pour simuler quand l'élément actuel est d'un type de plate-forme ; et le jugement, en fonction du type d'un élément précédent d'une ligne de connexion de flux, quand l'élément actuel est d'un type commun.

5. Procédé selon la revendication 1, comprenant en outre :
après la réalisation de ladite simulation et dudit débogage, la libération de la logique de service d'application côté terminal et de la logique de service d'application côté plate-forme ;
dans lequel l'étape de la libération de la logique de service d'application côté terminal et de la logique de service d'application côté plate-forme comprend :
le déploiement direct de la logique de service d'application côté terminal dans un système d'exécution de terminal et le déploiement de la logique de service d'application côté plate-forme dans un système d'exécution de plate-forme, ou, d'abord le traitement de la logique de service d'application côté terminal et de la logique de service d'application côté plate-forme pour générer un progiciel d'application de logique de service côté terminal et un progiciel d'application de logique de service côté plate-forme, puis le déploiement du progiciel d'application de logique de service côté terminal dans le système d'exécution de terminal et le déploiement du progiciel d'application de logique de service côté plate-forme dans le système d'exécution de plate-forme.

6. Système de génération intégrée pour une application de terminal de l'Internet des choses, comprenant :
un module de composant (10) configuré pour : la fourniture d'un composant de terminal et d'un composant de plate-forme qui sont exigés par l'application de terminal de l'Internet des objets ;
un module d'agencement (11) configuré pour : l'agencement du composant de terminal et du composant de plate-forme pour former un processus de service d'application et, après la réalisation de l'agencement, la génération d'une logique de service d'application côté terminal et d'une logique de service d'application côté plate-forme ; et
un module de débogage (12) configuré pour : l'établissement d'un canal d'information entre la logique de service d'application côté terminal et la logique de service d'application côté plate-forme, pour simuler et déboguer la logique de service d'application côté terminal et la logique de service d'application côté plate-forme ;
**caractérisé en ce que**
le module de débogage (12) est configuré pour la simulation et le débogage de la logique de service d'application côté terminal et de la logique de service d'application côté plate-forme au moyen de :
la simulation d'une condition d'exécution de la logique de service d'application côté terminal et d'une condition d'exécution de la logique de service d'application côté plate-forme par l'intermédiaire d'un canal de communication ; et
l'ajustement de la logique de service d'application côté terminal et de la logique de service d'application côté plate-forme en fonction de la condition d'exécution.

7. Système selon la revendication 6, dans lequel
le module d'agencement (11) fournit une zone d'agencement, ledit agencement est réalisé dans la zone d'agencement, et un objet agencé comprend les éléments suivants : un noeud, le composant de terminal, le composant de plate-forme, un service de déclenchement formé par l'encapsulation du composant de terminal et un service de déclenchement formé par l'encapsulation du composant de plate-forme.

8. Système selon la revendication 7, dans lequel
le module d'agencement (11) est configuré pour la génération d'une logique de service d'application coté terminal et d'une logique de service d'application coté plate-forme au moyen de :
la génération de la logique de service d'application côté terminal et de la logique de service d'application côté plate-forme en fonction d'une analyse et d'un jugement d'un type d'élément.

9. Système selon la revendication 6, dans lequel
le module de débogage (12) est en outre configuré pour : avant la simulation de la condition d'exécution de la logique de service d'application côté terminal et de la condition d'exécution de la logique de service d'application côté plate-forme, le jugement du type d'un élément actuel, et l'utilisation de la logique de service d'application côté terminal pour simuler quand l'élément actuel est d'un type de terminal ; l'utilisation de la logique de service d'application côté plate-forme pour simuler quand l'élément actuel est d'un type de plate-forme ; et le jugement, en fonction du type d'un élément précédent d'une ligne de connexion de flux, quand l'élément actuel est d'un type commun.

10. Système selon la revendication 6, comprenant en outre :
un module de libération (13) configuré pour : après la réalisation de la simulation et du débogage par le module de débogage, la libération de la logique de service d'application côté terminal et de la logique de service d'application côté plate-forme ;
dans lequel le module de libération (13) est configuré pour la libération de la logique de service d'application côté terminal et de la logique de service d'application côté plate-forme au moyen de :
le déploiement direct de la logique de service d'application côté terminal dans un système d'exécution de terminal et le déploiement de la logique de service d'application côté plate-forme dans un système d'exécution de plate-forme, ou, d'abord le traitement de la logique de service d'application côté terminal et de la logique de service d'application côté plate-forme pour générer un progiciel d'application de logique de service côté terminal et un progiciel d'application de logique de service côté plate-forme, puis le déploiement du progiciel d'application de logique de service côté terminal dans le système d'exécution de terminal et le déploiement du progiciel d'application de logique de service côté plate-forme dans le système d'exécution de plate-forme.
